# EUROPEAN PATENT APPLICATION

(11) **EP 4 343 400 A1**
(43) Date of publication of application: **27.03.2024**
(21) Application number: 22804523.3
(22) Date of filing: 27.04.2022
(51) Int. Cl.: G02B 6/44

(54) **OPTICAL CABLE**

(30) Priority: 17.05.2021 JP 2021083454
(71) Applicant: FUJIKURA LTD., Koto-ku Tokyo 135-8512 (JP)
(72) Inventor: SATO, Shinnosuke, Sakura-shi, Chiba 285-8550 (JP); HIKIMA, Daisuke, Sakura-shi, Chiba 285-8550 (JP); TAKEDA, Daiki, Sakura-shi, Chiba 285-8550 (JP); OSATO, Ken, Sakura-shi, Chiba 285-8550 (JP)
(74) Representative: Osha BWB
(86) International application number: PCT/JP2022/019022
(87) International publication number: WO 2022/244609

(57) **Abstract**

An optical cable according to the present disclosure includes: an optical fiber; an outer sheath configured to house the optical fiber; and a tubular reinforcement sheet located between the optical fiber and the outer sheath. In a cross section perpendicular to a length direction, the optical cable according to the present disclosure includes: a first zone in which the reinforcement sheet and the outer sheath are adhered together; and a second zone in which an adhesive strength between the reinforcement sheet and the outer sheath is weaker than the adhesive strength in the first zone.

## Description

### TECHNICAL FIELD

The present invention relates to an optical cable.

The present application claims priority based on Japanese Patent Application No. 2021-083454 filed on May 17,2021, the contents of which are incorporated herein by reference.

### BACKGROUND ART

PTL 1 discloses a technique of disposing a metal reinforcement sheet inside an outer sheath (external sheath) to protect optical fibers from being bitten by an animal such as a rat or a squirrel.

### CITATION LIST

### PATENT LITERATURE

PTL 1: Japanese Patent Application Laid-open Publication No. 2017-72801

### SUMMARY

### TECHNICAL PROBLEM

When an optical cable in which an outer sheath and a reinforcement sheet are adhered together gets twisted, the outer sheath may get damaged so as to crack.

An objective of the present invention is to suppress damage to an outer sheath.

### SOLUTION TO PROBLEM

A primary invention for achieving the aforementioned objective relates to an optical cable including: an optical fiber; an outer sheath configured to house the optical fiber; and a tubular reinforcement sheet located between the optical fiber and the outer sheath. In a cross section perpendicular to a length direction, the optical cable includes a first zone in which the reinforcement sheet and the outer sheath are adhered together, and a second zone in which an adhesive strength between the reinforcement sheet and the outer sheath is weaker than the adhesive strength in the first zone.

Other features of the invention will become apparent from the following disclosure of the present Description and Drawings.

### EFFECTS OF INVENTION

The present invention can suppress damage to an outer sheath.

### BRIEF DESCRIPTION OF DRAWINGS

[Fig. 1] Fig. 1 is a cross-sectional view of an optical cable 1 according to the present embodiment.
[Fig. 2] Fig. 2 is an explanatory diagram of the optical cable 1 according to the present embodiment.
[Fig. 3] Fig. 3A is an explanatory diagram of an optical cable 1 of a first modified example. Fig. 3B is an explanatory diagram of an optical cable 1 of a second modified example.
[Fig. 4] Fig. 4 is a cross-sectional view of an optical cable 1 in which tension members 25 are embedded in an outer sheath 20.
[Fig. 5] Fig. 5 is an explanatory diagram illustrating a state in which an optical cable 1 of a comparative example is twisted.

### DESCRIPTION OF EMBODIMENTS

At least the following features are disclosed in the Description and Drawings as described below.

Aspect 1 is an optical cable including: an optical fiber; an outer sheath configured to house the optical fiber; and a tubular reinforcement sheet located between the optical fiber and the outer sheath. In a cross section perpendicular to a length direction, the optical cable includes a first zone in which the reinforcement sheet and the outer sheath are adhered together, and a second zone in which an adhesive strength between the reinforcement sheet and the outer sheath is weaker than the adhesive strength in the first zone. With this optical cable, damage to the outer sheath can be suppressed.

Aspect 2 is an optical cable according to Aspect 1, wherein, where a percentage of the second zone with respect to an entire circumference of the reinforcement sheet is defined as A (%) and elongation at break of a resin constituting the outer sheath is defined as B (%), the product of A and B is 500 or greater. Thus, damage to the outer sheath can be suppressed.

Aspect 3 is an optical cable according to Aspect 2, wherein the percentage of the second zone with respect to the entire circumference of the reinforcement sheet is 50% or less. Thus, damage to the outer sheath can be suppressed.

Aspect 4 is an optical cable according to any one of Aspects 1 to 3, wherein the adhesive strength of the second zone is 0.5 N/mm or less. Thus, the outer sheath in the second zone can easily elongate and deform when twisted, and damage to the outer sheath can be suppressed.

Aspect 5 is an optical cable according to any one of Aspects 1 to 4, wherein the second zone is located in a region including an outer end of the reinforcement sheet wrapped in a tubular form. Thus, damage to the outer sheath can easily be suppressed.

Aspect 6 is an optical cable according to Aspect 5, wherein the second zone is located from the outer end toward an overlapping part in which both edges of the reinforcement sheet wrapped in a tubular form overlap one another. Thus, the optical cable can be produced easily.

Aspect 7 is an optical cable according to Aspect 5, wherein the second zone is located in a manner crossing over the outer end in a circumferential direction. Thus, damage to the outer sheath can easily be suppressed.

Aspect 8 is an optical cable according to any one of Aspects 1 to 4, wherein the second zone is located in a non-overlapping part other than the overlapping part in which both edges of the reinforcement sheet wrapped in a tubular form overlap one another, and the outer end of the reinforcement sheet does not coincide with an end of the second zone. Also with this structure, damage to the outer sheath can easily be suppressed.

Aspect 9 is an optical cable according to any one of Aspects 1 to 8, wherein no member other than an adhesive is located between the reinforcement sheet and the outer sheath. This achieves a configuration in which adhesive strength can be adjusted easily.

Aspect 10 is an optical cable according to any one of Aspects 1 to 9, wherein no tension member is embedded in the outer sheath. Thus, damage to the outer sheath can easily be suppressed.

Aspect 11 is an optical cable according to any one of Aspects 1 to 9, wherein a tension member is embedded in the outer sheath, and the tension member is located in a region on a radially outer side of the second zone within the outer sheath. Thus, damage to the outer sheath can easily be suppressed.

### Present Embodiment:

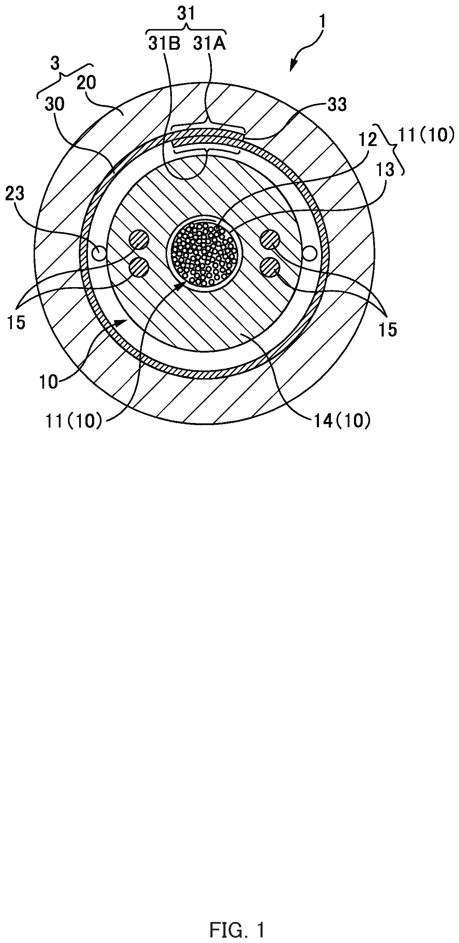

Fig. 1 is a cross-sectional view of an optical cable 1 according to the present embodiment. Note that the cross section is a plane perpendicular to the length direction of the optical cable 1.

The optical cable 1 is a cable configured to house an optical fiber 12. In the present embodiment, the optical cable 1 includes optical fibers 12, an outer sheath 20, and a reinforcement sheet 30. Herein, the optical cable 1 includes: an inner cable 10 including the optical fibers 12; and a protection tube 3 constituted by the outer sheath 20 and the reinforcement sheet 30.

The inner cable 10 is a cable including the optical fibers 12 and housed within the outer sheath 20. The inner cable 10 illustrated in the figure includes a core 11 and an inner sheath 14. The core 11 includes a plurality of optical fibers 12 and is housed within the inner sheath 14. The core 11 may be constituted by assembling a plurality of optical fibers 12, or may be constituted by one or more optical fiber ribbons, or may be constituted by a single optical fiber. The core 11 may be constituted by wrapping the optical fibers 12 with a sheet-like member (for example, a wrapping tape 13), or by bundling the optical fibers with a string-like member. The inner sheath 14 is a member for covering the core 11. Tension members 15 are embedded in the inner sheath 14. Note, however, that the inner sheath 14 does not have to include a tension member 15. The inner cable 10 illustrated in the figure is a slotless-structure center-tube-type optical cable. Note, however, that the inner cable 10 may be a slotted cable or a loose tube cable.

Further, the optical cable 1 does not have to include the inner cable 10 covered by the inner sheath 14. For example, instead of the inner cable 10, the core 11 may be housed directly within the protection tube 3 (the outer sheath 20 and the reinforcement sheet 30). Note, however, that with a configuration wherein the inner cable 10 covered by the inner sheath 14 is housed inside the outer sheath 20 (and the reinforcement sheet 30), it is possible to suppress damage to the optical fibers 12 when cutting open the outer sheath 20 (and the reinforcement sheet 30) with a tool.

The outer sheath 20 is a member (external sheath) configured to house the optical fibers 12. The outer sheath 20 illustrated in the figure is a member configured to house the inner cable 10 including the optical fibers 12. The outer sheath 20 is configured in a tubular form. The outer sheath 20 is disposed in the outer circumference of the reinforcement sheet 30. For example, the outer sheath 20 is constituted by a resin, such as polyethylene (PE), polyvinyl chloride (PVC), etc. The outer sheath 20 is formed by extrusion-molding a molten resin onto the outer circumference of the reinforcement sheet 30. Note that, in the outer sheath 20 illustrated in the figure, no other member, such as a tension member, is embedded therein. It is, however, possible to embed a tension member inside the outer sheath 20, as will be described further below.

The reinforcement sheet 30 is a sheet-like member located between the optical fibers 12 and the outer sheath 20. The reinforcement sheet 30 is disposed along the inner side of the outer sheath 20 in a state formed into a tubular shape. The outer sheath 20 is disposed on the outer side of the reinforcement sheet 30. The optical fibers 12 (in this example, the inner cable 10) are housed on the inner side of the reinforcement sheet 30. Other members, such as rip cords 23, may be housed on the inner side of the reinforcement sheet 30. Note, however, that no member (such as a rip cord) other than an adhesive is interposed between the reinforcement sheet 30 and the outer sheath 20. Not interposing any member (such as a rip cord) other than an adhesive between the reinforcement sheet 30 and the outer sheath 20 can facilitate adjustment of adhesive strength (described below) between the reinforcement sheet 30 and the outer sheath 20.

The reinforcement sheet 30 is constituted, for example, by a metal sheet. More specifically, the reinforcement sheet 30 is constituted by a sheet made of metal, such as stainless steel, copper, copper alloy, etc. By locating the metal-made reinforcement sheet 30 between the optical fibers 12 and the outer sheath 20, it is possible to protect the optical fibers 12 from getting bitten by an animal such as a rat, a squirrel, etc. Note, however, that the material for the reinforcement sheet 30 is not limited to metal, so long as it is possible to suppress the optical fibers 12 from getting bitten by an animal such as a rat, a squirrel, etc. For example, the material for the reinforcement sheet 30 may be fiber-reinforced plastic (FRP) including carbon fiber, glass fiber, aramid fiber, etc.

The reinforcement sheet 30 is formed by wrapping a sheet-like material in a tubular form. The side surface of the reinforcement sheet 30 wrapped in a tubular form may have bellows-like folds like a corrugated tube. The figures are rendered such that the entire side surface of the reinforcement sheet 30 is in contact with the outer sheath 20, but the entire side surface of the reinforcement sheet 30 does not have to be in contact with the outer sheath 20. For example, in cases where the reinforcement sheet 30 is formed like a corrugated tube, the outer sheath 20 may not enter the valley parts of the bellows-like side surface, and in such cases, portions (the valley parts) of the bellows-like side surface may not be in contact with the inner circumferential surface of the outer sheath 20.

The reinforcement sheet 30 is formed into a spiral shape (tubular shape) by overlapping both edges in the width direction. Both edges of the reinforcement sheet 30 in the circumferential direction overlap one another. In the description below, the part in which both edges of the reinforcement sheet 30 overlap one another is referred to as "overlapping part 31". Apart (region) of the reinforcement sheet 30 on the outer side of the overlapping part 31 is referred to as "outer region 31A", whereas a part (region) of the reinforcement sheet 30 on the inner side of the overlapping part 31 is referred to as "inner region 31B". An end (joint) on the outer side of the reinforcement sheet 30 is referred to as "outer end 33". The outer region 31A includes the outer end 33. A part (region) other than the overlapping part 31 of the reinforcement sheet 30 is referred to as a central region or a non-overlapping part.

It is preferable that, in the overlapping part 31, both edges of the reinforcement sheet 30 (the lower side of the outer region 31A and the upper side of the inner region 31B) are adhered together. In this way, the shape of the reinforcement sheet 30 can be easily retained. Note, however, that both edges of the reinforcement sheet 30 do not have to be adhered together in the overlapping part 31. Both ends of the overlapping part 31 (the lower side of the outer region 31A and the upper side of the inner region 31B) are arranged along the circumferential direction. Compared to a configuration wherein both ends of the overlapping part 31 are standing up (i.e., are arranged along the radial direction), by arranging both ends of the overlapping part 31 along the circumferential direction, the area of the overlapping part 31 can be widened even in the small space within the optical cable 1.

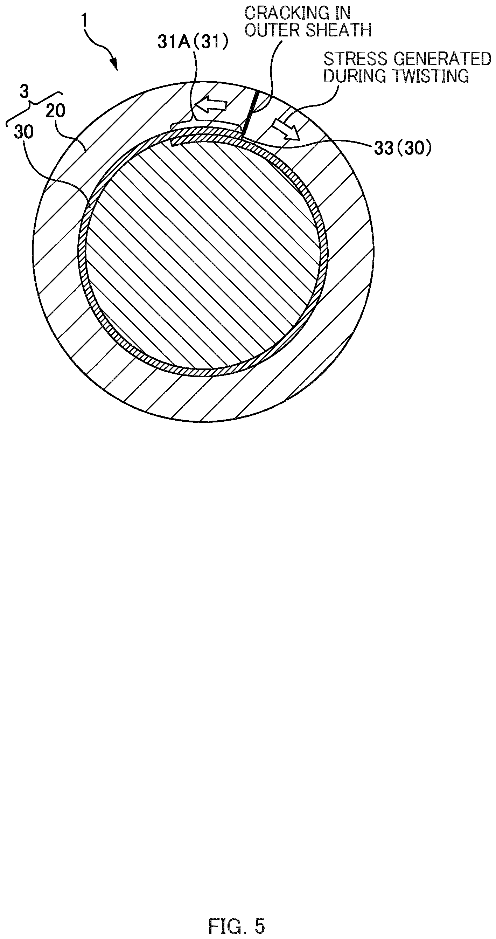

Fig. 5 is an explanatory diagram illustrating a state in which an optical cable 1 of a comparative example is twisted. Note that "twist" means to twist/turn the optical cable, and means to rotate the optical cable in opposite directions relatively at two positions separated from one another in the length direction (or to fix the optical cable at one of the two positions separated from one another in the length direction, and rotate the optical cable at the other position). In this figure, for the sake of brevity of illustration, the configuration on the inner side of the reinforcement sheet 30 is omitted from illustration.

In the comparative example, the outer sheath 20 and the entire zone of the outer circumference of the reinforcement sheet 30 are adhered (joined) together with a predetermined adhesive strength. For example, an adhesive layer (for example, a heat-fusion-type adhesive tape) may be applied in advance to the entire zone of the outer circumferential surface of the reinforcement sheet 30, and the outer sheath 20 (molten resin) may be extruded onto the outer circumference of the reinforcement sheet 30 formed in a tubular shape, to thereby cause the reinforcement sheet 30 and the outer sheath 20 to adhere to one another with a predetermined adhesive strength between the outer sheath 20 and the entire zone of the outer circumference of the reinforcement sheet 30. Note, however, that the adhesive layer cannot be formed on the outer end 33 of the reinforcement sheet 30, and therefore, a part that is not joined (non-adhesion part) will exist between the outer end 33 of the reinforcement sheet 30 and the outer sheath 20.

When the optical cable 1 of the comparative example is twisted, stress that is generated in the outer sheath 20 causes the outer sheath 20 to elongate in the circumferential direction. In the comparative example, the reinforcement sheet 30 and the outer sheath 20 are adhered together over the entire outer circumference of the reinforcement sheet 30 (i.e., the outer sheath 20 is restrained by the reinforcement sheet 30), and therefore, only the outer sheath 20 in the vicinity of the outer end 33 of the reinforcement sheet 30 (i.e., the outer sheath 20 in the vicinity of the non-adhesion part) will elongate and deform in the circumferential direction. Stated differently, in the comparative example, the elongation strain at the time of twisting of the optical cable 1 concentrates at the part indicated by the bold line in Fig. 5 (i.e., the outer sheath 20 in the vicinity of the outer end 33 of the reinforcement sheet 30; the outer sheath 20 in the vicinity of the non-adhesion part). As a result, the elongation strain of the outer sheath 20 tends to exceed a permissible value (corresponding to "elongation at break" described further below), and this may cause the outer sheath 20 to crack, starting from the outer end 33 of the reinforcement sheet 30.

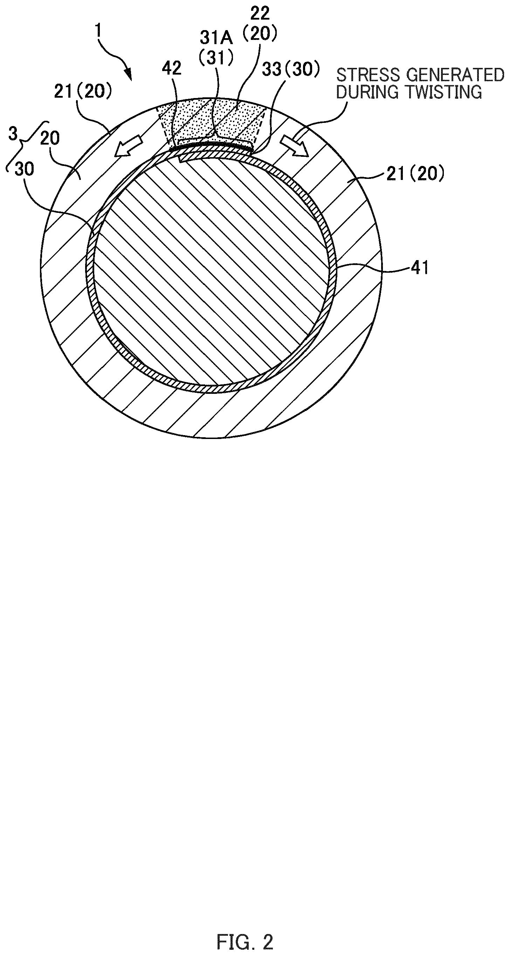

Fig. 2 is an explanatory diagram of the optical cable 1 according to the present embodiment. For the sake of brevity of illustration, the configuration on the inner side of the reinforcement sheet 30 is omitted from illustration.

In the present embodiment, in a cross section perpendicular to the length direction, a first zone 41 and a second zone 42 are located in the circumferential direction between the reinforcement sheet 30 and the outer sheath 20. In Fig. 2, the first zone 41 is illustrated by a thin line, and the second zone 42 is illustrated by a bold line. In the description below, the outer sheath 20 on the radially outer side (outer periphery) of the first zone 41 may be referred to as "first outer sheath 21", and the outer sheath on the radially outer side of the second zone 42 may be referred to as "second outer sheath 22". Stated differently, the first zone 41 is located between the reinforcement sheet 30 and the first outer sheath, and the second zone 42 is located between the reinforcement sheet 30 and the second outer sheath. In the figure, the second outer sheath 22 is illustrated by shading (stippling).

Similar to the comparative example, in the first zone 41, the reinforcement sheet 30 and the outer sheath 20 (first outer sheath 21) are adhered together. The adhesive strength between the reinforcement sheet 30 and the outer sheath 20 (the second outer sheath) in the second zone 42 is weaker than the adhesive strength between the reinforcement sheet 30 and the outer sheath 20 (the first outer sheath) in the first zone 41. Note that, in the second zone 42, the reinforcement sheet 30 and the outer sheath 20 (the second outer sheath) do not have to be adhered together.

As described above, when the optical cable 1 is twisted, stress that is generated in the outer sheath 20 causes the outer sheath 20 to elongate in the circumferential direction. In the present embodiment, the adhesive strength in the second zone 42 is relatively weak. Therefore, in the second outer sheath 22 (the outer sheath 20 on the outer periphery of the second zone 42; the shaded (stippled) part in the figure), elongating deformation in the circumferential direction is permitted, compared to the first outer sheath 21 (the outer sheath 20 on the outer periphery of the first zone 41). In the present embodiment, the part that can be subjected to elongating deformation (i.e., the second outer sheath 22; the shaded (stippled) part in the figure) is wider in the circumferential direction than in the comparative example, and thus, elongation strain of the outer sheath 20 can be dispersed. As a result, in the present embodiment, damage to the outer sheath 20 can be suppressed compared to the comparative example.

The adhesive strength between the reinforcement sheet 30 and the outer sheath 20 can be measured in terms of "peel strength". More specifically, the adhesive strength is measured as follows. First, a rectangular test piece is prepared by cutting the outer sheath 20 and the reinforcement sheet 30 of the optical cable 1 along the circumferential direction. At one end of the test piece (one end in the circumferential direction), peeling stress is applied so that the reinforcement sheet 30, the outer sheath 20, and the adhesive joint part between the reinforcement sheet 30 and the outer sheath 20 are in a T-peel geometry in a manner that breaking of the adhesive j oint part therebetween proceeds in a direction corresponding to the circumferential direction. The peel strength (unit: N/mm) is measured at the time the adhesive joint part between the reinforcement sheet 30 and the outer sheath 20 is broken, and the peel strength is considered as the adhesive strength. In the present embodiment, the peel strength (unit: N/mm) when the adhesive joint part between the second outer sheath 22 and the reinforcement sheet 30 is broken is weaker than the peel strength when the adhesive joint part between the first outer sheath 21 and the reinforcement sheet 30 is broken.

Note that, preferably, the adhesive strength between the reinforcement sheet 30 and the outer sheath 20 (the second outer sheath 22) in the second zone 42 is 0.5 N/mm or less (described further below). When the adhesive strength between the reinforcement sheet 30 and the outer sheath 20 in the second zone 42 is 0.5 N/mm or less, the reinforcement sheet 30 and the outer sheath 20 will be peeled apart in the second zone 42 at the time of twisting of the optical cable 1, and thus, the outer sheath 20 in the second zone 42 will be able to elongate and deform in the circumferential direction (and as a result, damage to the outer sheath 20 can be suppressed).

The cross section illustrated in Fig. 2 of the present embodiment has the same configuration over the entirety in the length direction of the optical cable 1. Note that, if a portion, in the length direction, of the optical cable 1 does not have the second zone 42, then elongation strain, which occurs when the optical cable 1 is twisted, may concentrate at the part lacking the second zone 42 (particularly, the part illustrated by the bold line in the comparative example of Fig. 5), and this may cause the outer sheath 20 to crack. Therefore, it is preferable that the configuration of the cross section illustrated in Fig. 2 is continuous along the length direction of the optical cable 1. Note, however, that as described above, in cases where the reinforcement sheet 30 is a corrugated tube, some parts (i.e., the valley parts) of the bellows-like side surface may not come into contact with the inner circumferential surface of the outer sheath 20. In this case, at some parts in the length direction of the optical cable 1, the entire zone, in the circumferential direction, of the bellows-like side surface of the reinforcement sheet 30 may not adhere to the outer sheath 20 (i.e., the outer circumferential surface of the reinforcement sheet 30 may have portions not adhering to the outer sheath 20). In such parts (in a cross-sectional view) where the entire zone, in the circumferential direction, of the outer circumferential surface of the reinforcement sheet 30 does not adhere to the outer sheath 20, there is no portion at which elongation strain will be concentrated when the optical cable 1 is twisted, and therefore, there is no need to include the first zone 41 and the second zone 42 of the present embodiment. Even in such cases, it will suffice if the first zone 41 and the second zone 42 of the present embodiment are included at parts (in a cross-sectional view) where the outer circumferential surface of the reinforcement sheet 30 is adhered to the outer sheath 20. In this way, it is possible to suppress damage to the outer sheath 20 at parts (in a cross-sectional view) where the outer circumferential surface of the reinforcement sheet 30 is adhered to the outer sheath 20.

An example of a method for making the adhesive strength of the second zone 42 weaker than the adhesive strength of the first zone 41 is as follows. First, a reinforcement sheet 30 having an adhesive layer in advance is prepared. The adhesive layer can be formed on the reinforcement sheet 30 by, for example, attaching a heat-fusion-type adhesive tape to the reinforcement sheet 30. By attaching, to the reinforcement sheet 30, an adhesive tape that is narrower than the width of the reinforcement sheet 30, no adhesive layer is formed in a region corresponding to the second zone 42 of the reinforcement sheet 30. (For example, a region corresponding to the second zone 42 is kept in a state in which no adhesive tape is bonded thereto.) Next, the reinforcement sheet 30 is formed into a tubular shape, and an outer sheath 20 (molten resin) is extrusion-molded onto the outer circumference of the tubular reinforcement sheet 30. The first zone 41 is provided with the adhesive layer in advance, and therefore, in the first zone 41, the heat of the outer sheath 20 (molten resin) at the time of extrusion molding causes the reinforcement sheet 30 and the outer sheath 20 (first outer sheath 21) to adhere to one another via the adhesive layer. Further, the inner region 31B of the overlapping part 31 is also provided with an adhesive layer in advance, and therefore, the heat of the outer sheath 20 (molten resin) at the time of extrusion molding causes both ends of the reinforcement sheet 30 to be adhered together in the overlapping part 31. On the other hand, the second zone 42 does not have an adhesive layer, and therefore, the adhesive strength of the second zone 42 becomes weaker than the adhesive strength of the first zone 41. Note that it is also possible to make the adhesive strength of the second zone 42 weaker than the adhesive strength of the first zone 41 without using an adhesive layer. For example, at the time of extrusion-molding the outer sheath 20 (molten resin) onto the outer circumference of the tubular reinforcement sheet 30, a larger space may be formed between the outer sheath 20 (molten resin) and the reinforcement sheet 30 at the part corresponding to the second zone 42 compared to the part corresponding to the first zone 41, and in this way, it is possible to make the adhesive strength of the second zone 42 weaker than the adhesive strength of the first zone 41 without using an adhesive layer. In this case, for example, an extrusion die (a die for determining the shape of the outer sheath 20) of an extruder may be shaped such that a part of the die's inner circumferential surface corresponding to the second zone 42 is formed in an oval-like shape or outwardly-protruding shape, and in this way, a space can be formed between the reinforcement sheet 30 and the outer sheath 20 (molten resin) at the part corresponding to the second zone 42, thus making the adhesive strength of the second zone 42 weaker than the adhesive strength of the first zone 41.

Note, however, that methods for making the adhesive strength of the second zone 42 weaker than the adhesive strength of the first zone 41 are not limited to the methods described above (described further below).

In the example illustrated in Fig. 2, the second zone 42 is located between the outer sheath 20 and the edge part on the outer side of the reinforcement sheet 30 wrapped in a tubular form, and the second zone 42 is located in a region including the outer end 33. By locating the second zone 42 in a region including the outer end 33, cracking of the outer sheath 20 (see Fig. 5) starting from the outer end 33 can easily be suppressed.

In the example illustrated in Fig. 2, the outer end 33 of the reinforcement sheet 30 is located at an end part of the second zone 42 in the circumferential direction, and the second zone 42 is located in a region from the outer end 33 toward the overlapping part 31 (i.e., in a region from the outer end 33 toward the side of the outer region 31A). In cases where the second zone 42 is located from the outer end 33 toward the overlapping part 31 as in this example, it is possible to make the adhesive strength of the second zone 42 weaker than the adhesive strength of the first zone 41 simply by preparing a reinforcement sheet 30 in which no adhesive layer is disposed in a region of the reinforcement sheet 30 corresponding to the second zone 42 (and further forming this reinforcement sheet 30 into a tubular shape and extrusion-molding an outer sheath 20 onto the outer circumference of the tubular reinforcement sheet 30). Thus, the optical cable 1 can be produced easily.

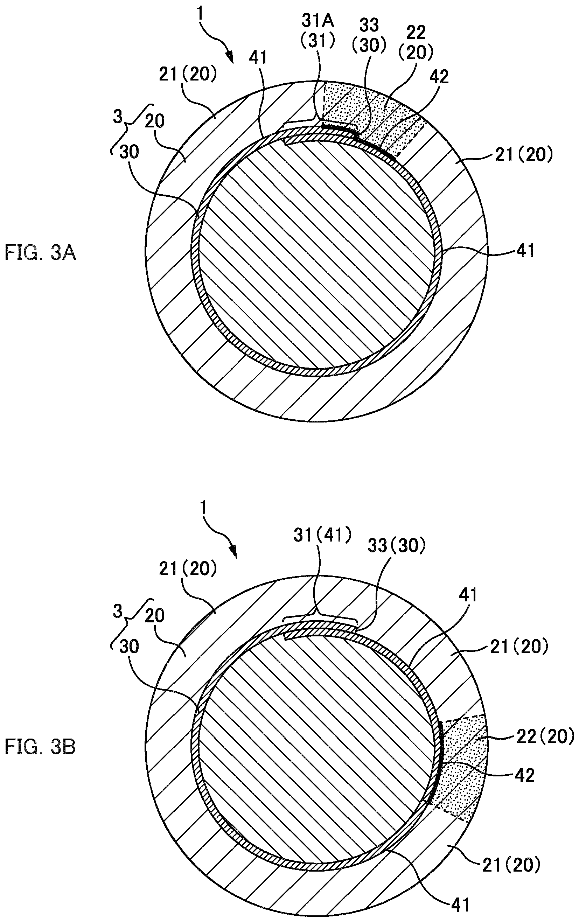

Fig. 3A is an explanatory diagram of an optical cable 1 of a first modified example. Fig. 3B is an explanatory diagram of an optical cable 1 of a second modified example.

In both the first modified example and the second modified example, a first zone 41 and a second zone 42 are located between a reinforcement sheet 30 and an outer sheath 20 in a cross section perpendicular to the length direction. In Figs. 3A and 3B, the first zone 41 is illustrated by a thin line, and the second zone 42 is illustrated by a bold line. In the figures, the second outer sheath 22 is illustrated by shading (stippling). In both the first modified example and the second modified example, the adhesive strength between the reinforcement sheet 30 and the outer sheath 20 (the second outer sheath 22) in the second zone 42 is weaker than the adhesive strength between the reinforcement sheet 30 and the outer sheath 20 (the first outer sheath 21) in the first zone 41.

In the first modified example illustrated in Fig. 3A, the second zone 42 is located in a manner crossing over the outer end 33 of the reinforcement sheet 30 in the circumferential direction. Stated differently, the outer end 33 of the reinforcement sheet 30 is located in a central part of the second zone 42 in the circumferential direction. In the first modified example, the second zone 42 is not only located from the outer end 33 toward the side of the overlapping part 31, but the second zone 42 is located also from the outer end 33 toward the side of the central region (the region other than the overlapping part 31; non-overlapping part). Also in the first modified example, the second zone 42 is located in a region including the outer end 33, and thus, cracking of the outer sheath 20 (see Fig. 5) starting from the outer end 33 can easily be suppressed.

In the first modified example illustrated in Fig. 3A, an example of a method for making the adhesive strength of the second zone 42 weaker than the adhesive strength of the first zone 41 is as follows. First, a reinforcement sheet 30 is prepared, wherein an adhesive layer (e.g., a heat-fusion-type adhesive tape) is provided in advance to the entire outer circumferential surface of the reinforcement sheet 30. Next, the reinforcement sheet 30 is formed into a tubular shape, and a region corresponding to the second zone 42 is heated (pre-heated) in order to weaken the adhesive strength of the second zone 42. Then, an outer sheath 20 (molten resin) is extrusion-molded onto the outer circumference of the tubular reinforcement sheet 30. The first zone 41 is provided with the adhesive layer in advance, and therefore, in the first zone 41, the heat of the outer sheath 20 (molten resin) at the time of extrusion molding causes the reinforcement sheet 30 and the outer sheath 20 (first outer sheath 21) to adhere to one another via the adhesive layer. On the other hand, in the second zone 42, the adhesive layer has been pre-heated, and therefore, the adhesive strength of the second zone 42 becomes weaker than the adhesive strength of the first zone 41.

Note that, also in the first modified example, it is possible to make the adhesive strength of the second zone 42 weaker than the adhesive strength of the first zone 41 by preparing a reinforcement sheet 30 in which no adhesive layer is disposed in a region of the reinforcement sheet 30 corresponding to the second zone 42 (and further forming this reinforcement sheet 30 into a tubular shape and extrusion-molding an outer sheath 20 onto the outer circumference of the tubular reinforcement sheet 30). With this method, however, it is difficult to achieve both the adhesion of both ends of the reinforcement sheet 30 in the overlapping part 31 and the formation of the second zone 42 from the outer end 33 toward the central region side. Therefore, in the first modified example, it is preferable to weaken the adhesive strength of the second zone 42 by pre-heating the adhesive layer after forming the reinforcement sheet 30 into a tubular shape.

In the second modified example illustrated in Fig. 3B, the second zone 42 is located in the central region (the region other than the overlapping part 31; non-overlapping part). In the second modified example, the second zone 42 is not located in the outer region 31A of the reinforcement sheet 30. In the second modified example, the second zone 42 is located in the central region of the reinforcement sheet 30 (the region other than the overlapping part 31; non-overlapping part), and also, the outer end 33 of the reinforcement sheet 30 does not coincide with an end of the second zone 42.

In case of the second modified example, it is possible to make the adhesive strength of the second zone 42 weaker than the adhesive strength of the first zone 41 by preparing a reinforcement sheet 30 in which no adhesive layer is disposed in a region corresponding to the second zone 42 (and further forming this reinforcement sheet 30 into a tubular shape and extrusion-molding an outer sheath 20 onto the outer circumference of the tubular reinforcement sheet 30). Further, in case of the second modified example, it is also possible to weaken the adhesive strength of the second zone 42 by pre-heating the adhesive layer after forming the reinforcement sheet 30 into a tubular shape, as in the first modified example.

Also in the second modified example illustrated in Fig. 3B, the adhesive strength between the reinforcement sheet 30 and the outer sheath 20 (the second outer sheath 22) in the second zone 42 is weaker than the adhesive strength between the reinforcement sheet 30 and the outer sheath 20 (the first outer sheath 21) in the first zone 41. Therefore, when the optical cable 1 is twisted, in the second outer sheath 22 (the outer sheath 20 on the outer periphery of the second zone 42; see the shaded (stippled) part in Fig. 3B), elongating deformation in the circumferential direction is permitted, compared to the first outer sheath 21 (the outer sheath 20 on the outer periphery of the first zone 41). Hence, also in the second modified example, the part that can be subjected to elongating deformation (i.e., the second outer sheath 22; the shaded (stippled) part in the figure) is wider in the circumferential direction than in the comparative example, and thus, elongation strain of the outer sheath 20 can be dispersed and damage to the outer sheath 20 can be suppressed.

In case of the second modified example illustrated in Fig. 3B, cracking of the outer sheath 20 starting from the outer end 33 of the reinforcement sheet 30 may be more likely to occur compared to the optical cables 1 illustrated in Fig. 2 and Fig. 3A. It is therefore preferable to locate the second zone 42 in a region including the outer end 33 of the reinforcement sheet 30, as illustrated in Fig. 2 and Fig. 3A. Note that the optical cable 1 illustrated in Fig. 2 can be produced more easily compared to the optical cable 1 illustrated in Fig. 3A, because there is no need for a step (e.g., a pre-heating step) for weakening the adhesive strength of the second zone 42 after forming the reinforcement sheet 30 into a tubular shape. On the other hand, the optical cable 1 illustrated in Fig. 3A is capable of more easily suppressing cracking of the outer sheath 20 starting from the outer end 33 of the reinforcement sheet 30 compared to the optical cable 1 illustrated in Fig. 2, because the outer end 33 of the reinforcement sheet 30 is located in the central part of the second zone 42 in the circumferential direction.

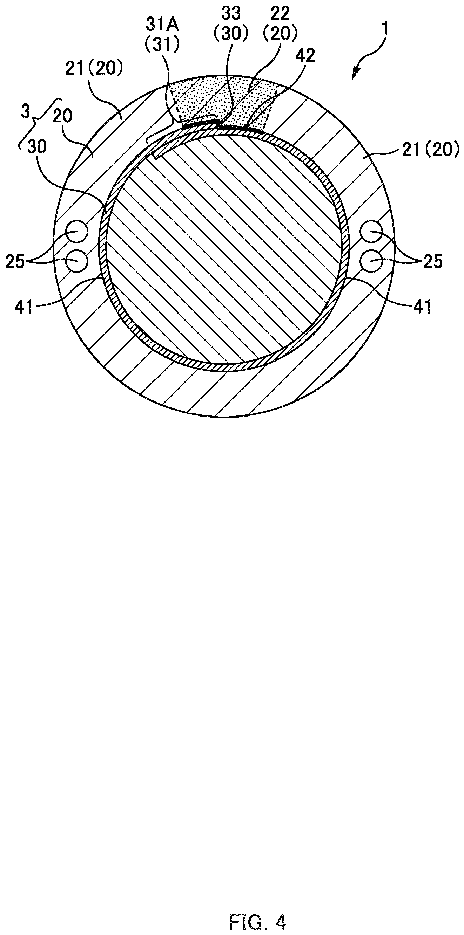

Fig. 4 is a cross-sectional view of an optical cable 1 in which tension members 25 are embedded in the outer sheath 20.

In the aforementioned optical cables 1 illustrated in Figs. 1, 2, 3A, and 3B, no tension member is embedded in the outer sheath 20. However, tension members 25 may be embedded in the outer sheath 20, as illustrated in Fig. 4. When an optical cable 1 having a tension member 25 embedded in the outer sheath 20 is twisted, in the vicinity of the tension member 25, the outer sheath 20 tends to be inhibited from elongating and deforming in the circumferential direction, whereas the outer sheath 20 is likely to elongate and deform in the circumferential direction at parts located away from the tension member 25. Therefore, in cases of embedding a tension member in the outer sheath 20, it is preferable to embed the tension member 25 in the outer sheath 20 (first outer sheath 21) on the radially outer side (outer periphery) of the first zone 41, and, in turn, not embed the tension member 25 in the outer sheath 20 (second outer sheath 22; the shaded (stippled) region in the figure) on the radially outer side of the second zone 42. Stated differently, it is preferable that the second zone 42 is not located on the radially inner side of the tension member 25 (in the vicinity of the tension member; immediately below the tension member) embedded in the outer sheath 20. In this way, the second outer sheath 22 can elongate and deform in the circumferential direction more easily compared to the first outer sheath 21, and thus, damage to the outer sheath 20 can be suppressed. Note that, in cases where no tension member 25 is embedded in the outer sheath 20 as in the optical cables 1 described above, the outer sheath 20 will not be inhibited from elongating/deforming in the circumferential direction by the tension member 25. Therefore, it is also preferable that no tension member 25 is embedded in the outer sheath 20, as in the aforementioned optical cables 1.

### Examples:

Optical cables 1 having the structure illustrated in Fig. 1 (and Fig. 2) were produced, and the optical cables 1 were subjected to a twist test. More specifically, 864 pieces of optical fibers 12 were prepared, and a plurality of types of optical cables 1 were produced by varying the percentage of the second zone 42 and the type of resin constituting the outer sheath 20. Each optical cable 1 was subjected to a twist test compliant with ICEA S-87-640. In the twist test, the optical cable 1 was twisted by 180 degrees in both the plus direction and minus direction per 1 meter length, and abnormalities in the appearance of the optical cable 1 (herein, cracks in the outer sheath 20) were observed. Examples with no abnormality in the appearance of the optical cable 1 were evaluated as "pass", whereas examples with an abnormality in the appearance of the optical cable 1 were evaluated as "fail".

**[Table 1]**

| | | Elongation at break B [%] of outer sheath | | | | | |
|---|---|---|---|---|---|---|---|
| Percentage A [%] of second zone | | 50 | 100 | 200 | 500 | 800 | 1000 |
| Comparative Example | 0 | 0 Fail | 0 Fail | 0 Fail | 0 Fail | 0 Fail | 0 Fail |
| Example 1 | 3 | 150 Fail | 300 Fail | 600 Pass | 1500 Pass | 2400 Pass | 3000 Pass |
| Example 2 | 5 | 250 Fail | 500 Pass | 1000 Pass | 2500 Pass | 4000 Pass | 5000 Pass |
| Example 3 | 10 | 500 Pass | 1000 Pass | 2000 Pass | 5000 Pass | 8000 Pass | 10000 Pass |
| Example 4 | 20 | 1000 Pass | 2000 Pass | 4000 Pass | 10000 Pass | 16000 Pass | 20000 Pass |

| | | | | | | | |
|---|---|---|---|---|---|---|---|
| Upper row: Value X = A×B Lower row: Evaluation result of twist test | | | | | | | |

As shown in Table 1, the percentage of the second zone 42 with respect to the entire circumference of the reinforcement sheet 30 is defined as A (%), and elongation at break of resin constituting the outer sheath 20 is defined as B (%). As described above, since the present embodiment is based on the premise that the second outer sheath 22 on the outer periphery of the second zone 42 (the shaded (stippled) region in Fig. 2) will elongate and deform in the circumferential direction, value X (=A×B), which is the product of the percentage A (%) of the second zone 42 and the elongation at break B (%) of the outer sheath 20 (second outer sheath 22), is calculated, and the value X is associated with the evaluation result of the twist test in Table 1.

As shown in Table 1, when the percentage of the second zone 42 was 0%, cracking occurred in the outer sheath 20 during the twist test. The cause of cracking of the outer sheath 20 is thought to be because elongation strain concentrating on a local part of the outer sheath 20 (the part illustrated by the bold line in Fig. 5; the outer sheath 20 in the vicinity of the outer end 33 of the reinforcement sheet 30) exceeded the elongation at break of the outer sheath 20.

When the percentage of the second zone 42 was 3%, cracking occurred in cases where the outer sheath 20 had an elongation at break of 50% and 100%, whereas cracking did not occur in cases where the outer sheath 20 had an elongation at break of 200% or greater. When the percentage of the second zone 42 was 5%, cracking occurred in cases where the outer sheath 20 had an elongation at break of 50%, whereas cracking did not occur in cases where the outer sheath 20 had an elongation at break of 100% or greater. As described above, it was found that, the greater the elongation at break of the resin constituting the outer sheath 20, the more it was possible to suppress the occurrence of cracking of the outer sheath 20 in the twist test.

On the other hand, in cases where the outer sheath 20 had an elongation at break of 50%, cracking occurred in the outer sheath 20 when the percentage of the second zone 42 was 5% or less, whereas cracking did not occur in the outer sheath 20 when the percentage of the second zone 42 was 10% or greater. Further, in cases where the outer sheath 20 had an elongation at break of 100%, cracking occurred in the outer sheath 20 when the percentage of the second zone 42 was 3% or less, whereas cracking did not occur in the outer sheath 20 when the percentage of the second zone 42 was 5% or greater. As described above, it was found that, the greater the percentage of the second zone 42, the more it was possible to suppress the occurrence of cracking of the outer sheath 20 in the twist test.

As described above, it was found that, the greater the elongation at break of the resin constituting the outer sheath 20 and the greater the percentage of the second zone 42, the more it was possible to suppress the occurrence of cracking of the outer sheath 20 in the twist test. From this result, since it is premised that the outer sheath 20 on the outer periphery of the second zone 42 (the shaded (stippled) region in Fig. 2) will elongate and deform in the circumferential direction, it can be said that, the greater the value X (=A×B), which is the product of the percentage A (%) of the second zone 42 and the elongation at break B (%) of the outer sheath 20, the more it is possible to suppress the occurrence of cracking of the outer sheath 20 in the twist test. As shown in Table 1, it was found that, when the value X (=A×B), which is the product of the percentage A (%) of the second zone 42 and the elongation at break B (%) of the outer sheath 20, was 500 or greater, it was possible to suppress the occurrence of cracking of the outer sheath 20 in the twist test. It should be noted that the same results as in Table 1 were obtained when optical cables 1 having the structure illustrated in Fig. 3B were produced and the optical cables 1 were subjected to a twist test. This result shows that it is preferable that the product of the percentage A (%) of the second zone 42 and the elongation at break B (%) of the outer sheath 20 is 500 or greater.

Further, a plurality of types of optical cables 1 were produced by varying the percentage of the second zone 42 while forming the outer sheath 20 by a resin having an elongation at break of 100%, and each optical cable 1 was subjected to a twist test and tensile test compliant with ICEA S-87-640. In the tensile test, the optical cable 1 was subjected to a tensile load of 2700 N, and presence/absence of abnormalities in the appearance of the optical cable 1 was evaluated. Also in the tensile test, abnormalities in the appearance of the optical cable 1 after the test (herein, cracks in the outer sheath 20) were observed, and examples with no abnormality in the appearance of the optical cable 1 were evaluated as "pass", whereas examples with an abnormality in the appearance of the optical cable 1 were evaluated as "fail".

**[Table 2]**

| | Percentage of second zone [%] | Twist test | Tensile test | Overall evaluation |
|---|---|---|---|---|
| Comparative Example | 0 | Fail | Pass | Fail |
| Example 1 | 3 | Fail | Pass | Fail |
| Example 2 | 5 | Pass | Pass | Pass |
| Example 3 | 10 | Pass | Pass | Pass |
| Example 4 | 20 | Pass | Pass | Pass |
| Example 5 | 30 | Pass | Pass | Pass |
| Example 6 | 40 | Pass | Pass | Pass |
| Example 7 | 50 | Pass | Pass | Pass |
| Example 8 | 60 | Pass | Fail | Fail |

As shown in Table 2, when the percentage of the second zone 42 was 0% and 3%, cracking occurred in the outer sheath 20 in the twist test, whereas when the percentage of the second zone 42 was 5% or greater, cracking did not occur in the outer sheath 20 in the twist test. Here, since the elongation at break was 100% (B=100), it was found that, when the value X (=A×B)-which is the product of the percentage A (%) of the second zone 42 and the elongation at break B (%) of the outer sheath 20 (the second outer sheath)-was 500 or greater, it was possible to suppress the occurrence of cracking of the outer sheath 20 in the twist test, as with the results of the twist test shown in Table 1. On the other hand, when the percentage of the second zone 42 was 60%, cracking occurred in the outer sheath 20 in the tensile test. From this result, it was found that, when the percentage of the second zone 42 is 60% or greater, the zone having a weak adhesive strength occupies more than half the entire circumference, and thus, the structure of the optical cable 1 cannot be retained soundly in the tensile test. Therefore, it is preferable that the percentage of the second zone 42 is 50% or less (less than 60%). Further, if the product of the percentage A (%) of the second zone 42 and the elongation at break B (%) of the outer sheath 20 is 500 or greater and also the percentage of the second zone 42 is 50% or less, it is possible to suppress cracking of the outer sheath both during the twist test and during the tensile test.

Further, a plurality of types of optical cables 1 were produced by varying the adhesive strength (unit: N/mm) of the second zone 42 while keeping the percentage A of the second zone 42 at 10%, and each optical cable 1 was subjected to a twist test compliant with ICEA S-87-640.

**[Table 3]**

| | Adhesive strength of second zone [N/mm] | Twist test |
|---|---|---|
| Example A | 0.1 | Pass |
| Example B | 0.2 | Pass |
| Example C | 0.5 | Pass |
| Example D | 1.0 | Fail |
| Example E | 2.0 | Fail |

As shown in Table 3, in cases where the adhesive strength of the second zone 42 was 1.0 N/mm or greater, cracking occurred in the outer sheath 20 during the twist test. The reason to this is thought to be as follows. In cases where the adhesive strength of the second zone 42 was stronger than a predetermined value, the adhesion between the reinforcement sheet 30 and the outer sheath 20 in the second zone 42 was retained during the twist test (i.e., the reinforcement sheet 30 and the outer sheath 20 in the second zone 42 were not peeled apart) even when the adhesive strength of the second zone 42 was weaker than the adhesive strength of the first zone 41 (for example, even if the adhesive strength of the second zone 42 was about 10% of the adhesive strength of the first zone 41). In this case, the outer sheath 20 of the second zone 42 was inhibited from elongating and deforming in the circumferential direction during the twist test, and as a result, the outer sheath 20 cracked, starting from the outer end 33 of the reinforcement sheet 30. In contrast, as shown in Table 3, in cases where the adhesive strength of the second zone 42 was 0.5 N/mm or less, cracking did not occur in the outer sheath 20 in the twist test. This is thought to be because, in cases where the adhesive strength of the second zone 42 was 0.5 N/mm or less, the reinforcement sheet 30 and the outer sheath 20 (the second outer sheath 22) in the second zone 42 got peeled apart during the twist test, and the second outer sheath 22 elongated and deformed in the circumferential direction. Thus, it is preferable that the adhesive strength between the reinforcement sheet 30 and the outer sheath 20 (the second outer sheath 22) in the second zone 42 is 0.5 N/mm or less.

### Other Embodiments:

The foregoing embodiments are for facilitating the understanding of the present invention, and are not to be construed as limiting the present invention. The present invention may be modified and/or improved without departing from the gist thereof, and it goes without saying that the present invention encompasses equivalents thereof. Further, the various embodiments described above may be employed in combination, as appropriate.

For example, in the foregoing embodiments, the reinforcement sheet 30 has an overlapping part 31, but the reinforcement sheet 30 does not have to include an overlapping part 31. For example, the end parts of the reinforcement sheet 30 may be welded together, to form the reinforcement sheet 30 into a tubular shape without including an overlapping part 31. Even with a structure lacking an overlapping part 31, it is effective to include a second zone 42 in which the adhesive strength between the reinforcement sheet 30 and the outer sheath 20 is weaker than the adhesive strength in the first zone 41, in cases where there is a part on which elongation strain is likely to concentrate when the optical cable 1 is twisted (for example, in cases where stress is likely to concentrate on the outer sheath 20 in the vicinity of the welded part of the reinforcement sheet 30 (the outer sheath 20 in the vicinity of the non-adhesion part)).

### REFERENCE SIGNS LIST

1: Optical cable;
3: Protection tube;
10: Inner cable;
11: Core;
12: Optical fiber;
13: Wrapping tape;
14: Inner sheath;
15: Tension member;
20: Outer sheath;
21: First outer sheath;
22: Second outer sheath;
23: Rip cord;
30: Reinforcement sheet;
31: Overlapping part;
31A: Outer region;
31B: Inner region;
33: Outer end;
41: First zone;
42: Second zone.

## Claims

1. An optical cable comprising:
an optical fiber;
an outer sheath configured to house the optical fiber; and
a tubular reinforcement sheet located between the optical fiber and the outer sheath, wherein,
in a cross section perpendicular to a length direction, the optical cable includes
a first zone in which the reinforcement sheet and the outer sheath are adhered together, and
a second zone in which an adhesive strength between the reinforcement sheet and the outer sheath is weaker than the adhesive strength in the first zone.

2. The optical cable according to claim 1, wherein
where a percentage of the second zone with respect to an entire circumference of the reinforcement sheet is defined as A (%) and elongation at break of a resin constituting the outer sheath is defined as B (%), a product of A and B is 500 or greater.

3. The optical cable according to claim 2, wherein
the percentage of the second zone with respect to the entire circumference of the reinforcement sheet is 50% or less.

4. The optical cable according to any one of claims 1 to 3, wherein
the adhesive strength of the second zone is 0.5 N/mm or less.

5. The optical cable according to any one of claims 1 to 4, wherein
the second zone is located in a region including an outer end of the reinforcement sheet wrapped in a tubular form.

6. The optical cable according to claim 5, wherein
the second zone is located from the outer end toward an overlapping part in which both edges of the reinforcement sheet wrapped in a tubular form overlap one another.

7. The optical cable according to claim 5, wherein
the second zone is located in a manner crossing over the outer end in a circumferential direction.

8. The optical cable according to any one of claims 1 to 4, wherein
the second zone is located in a non-overlapping part other than the overlapping part in which both edges of the reinforcement sheet wrapped in a tubular form overlap one another, and
the outer end of the reinforcement sheet does not coincide with an end of the second zone.

9. The optical cable according to any one of claims 1 to 8, wherein
no member other than an adhesive is located between the reinforcement sheet and the outer sheath.

10. The optical cable according to any one of claims 1 to 9, wherein
no tension member is embedded in the outer sheath.

11. The optical cable according to any one of claims 1 to 9, wherein
a tension member is embedded in the outer sheath, and
the tension member is located in a region on a radially outer side of the second zone within the outer sheath.
